# EUROPEAN PATENT APPLICATION

(11) **EP 3 000 431 A1**
(43) Date of publication of application: **30.03.2016**
(21) Application number: 15170836.9
(22) Date of filing: 05.06.2015
(51) Int. Cl.: A61C 19/06

(54) **PLANAR ORAL CARE PATCH, ORAL CARE PATCH TAPE AND METHOD OF USING THE SAME**

(30) Priority: 29.09.2014 US 201414501013
(71) Applicant: Toothfilm Inc., Taipei City 10056 (TW)
(72) Inventor: Chou, Hsien-Sung, Taipei City 100 (TW); Ma, Chen-Feng, 201 Keelung City (TW)
(74) Representative: Becker Kurig Straus

(57) **Abstract**

A planar oral care patch (300) is provided. The planar oral care patch (300) comprises a first split (304) stretching along a first direction (404) in a central region (400) of the planar oral care patch (300) so that the planar oral care patch (300) can be folded as a three-dimensional shape. An oral care patch tape (600) having a plurality of the planar oral care patch (300) is provided. A method of using the planar oral care patch, a method of treating an oral disease and a method of prophylactically treating an oral disease by using the planar oral care patch are also provided.

## Description

### Field of the Invention

The present invention is related to a planar oral care patch which can be folded into a three-dimensional concave structure, a related oral care patch tape, a method of using the same according to the pre-characterizing clause of claims 1, 19 and 20.

### Background of the Invention

Rising levels of prosperity and quality of life have driven higher consumer expectations regarding quality of oral health and esthetic norms for tooth appearance. Many tooth tray or paste products for enhancing oral health and tooth whitening are commercially available to satisfy these expectations, both over-the-counter products (OTC products) and products requiring a dentist's prescription. While OTC products are inexpensive, they have known limitations. For example, since the OTC products adopt one-size, uniformly shaped trays, they do not fit various tooth sizes and shapes, and thus cause irritation to teeth due to poorly fitting trays and excessively applied gels.

On the other hand, products requiring prescription are manufactured according to the contour and size of the patient's teeth. This solves the problems associated with OTC products to some extent, but prescription products are disadvantageously expensive and require regular dental visits. In addition, tooth whitening trays are thick, have poor adhesion and cause a foreign body sensation during application. As reusable products, they also require washing before and after use to prevent bacterial growth.

In order to solve the above-mentioned disadvantages of tooth trays, tooth whitening products in the form of pastes have been developed. However, most of the products developed thus far fail to effectively resolve the problem of poor adhesion and are not designed to completely cover the inner and outer sides of the teeth.

### Summary of the Invention

This in mind, the present invention aims at providing an oral care patch which is convenient to use and can be widely applicable.

This is achieved by an oral care patch which can be folded into a three-dimensional concave structure according to claim 1. The dependent claims pertain to corresponding further developments and improvements.

As will be seen more clearly from the detailed description following below, the claimed planar oral care patch comprises a first split stretching along a first direction in a central region of the planar oral care patch so that the planar oral care patch can be folded as a three-dimensional shape.

As will be seen more clearly from the detailed description following below, the claimed oral care patch tape comprises a plurality of the planar oral care patches described above, wherein each of the planar oral care patches are bundled in series and a dissemble line is disposed between each of the two planar oral care patches.

As will be seen more clearly from the detailed description following below, the claimed method of using the planar oral care patch comprises the following steps. First, a planar oral care patch shown above is provided. The first split is split and the planar oral care patch is folded as a three-dimensional structure. Then, the oral care patch is attached onto a target tissue.

The oral care patch set forth in the present invention is originally planar and can be folded into different three dimensional structures depending on different requirements or different target tissue. The oral care patch can be packed in series as a tape bundle and can be easily taken when needed. The oral care patch can be used for treating disease or dental cosmetic use.

### Brief Description of the Drawings

In the following, the invention is further illustrated by way of example, taking reference to the accompanying drawings. Thereof:
FIG. 1 and FIG. 2 are schematic diagrams of the oral care patch according to one embodiment of the present invention,
FIG. 3 shows a schematic diagram of the oral care patch according to one embodiment of the present invention,
FIG. 4 and FIG. 5 are schematic diagrams of the three-dimensional structures of the oral care patch according to different embodiments of the present invention,
FIG. 6 and FIG. 7 are schematic diagrams of the planar oral care patch according to different embodiments of the present invention,
FIG. 8 and FIG. 9 are schematic diagrams of the planar oral care patch according to different embodiments of the present invention,
FIG. 10 is a schematic diagram of the oral care patch tape according to one embodiment of the present invention, and
FIG. 11 is a schematic diagram of the using method of the oral care patch tape according to one embodiment of the present invention.

### Detailed Description

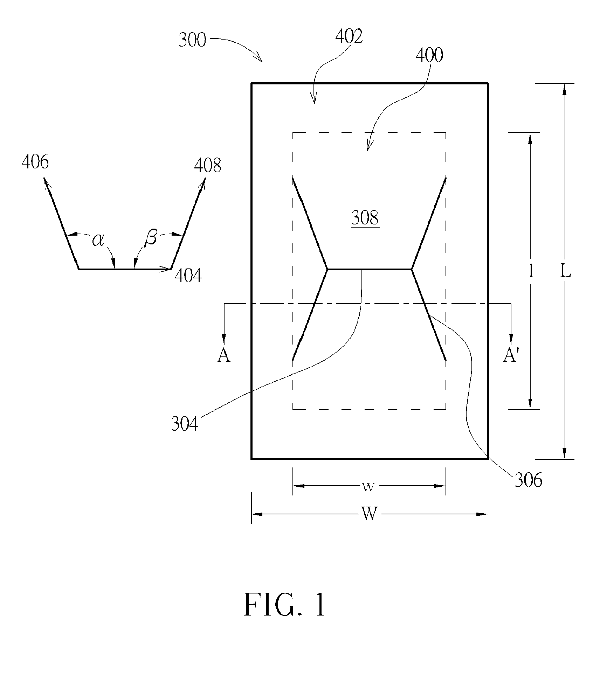

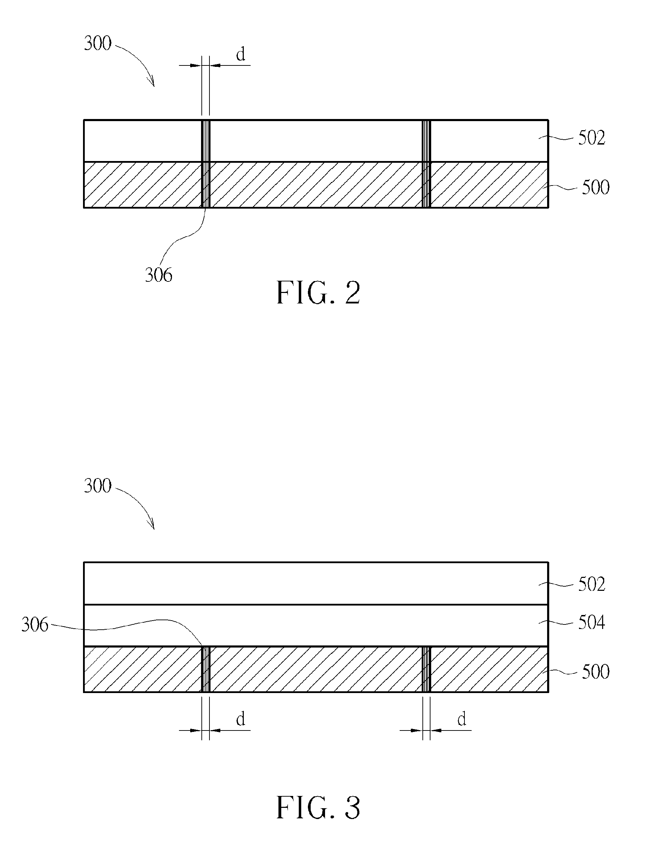

The present invention is related to an oral care patch which comprises at least one oral care agent, so the oral care patch can provide tooth care function when it contacts the tooth or the oral mucosa. The care patch is originally manufactured in a planar structure, and can be folded into a three dimensional structure thereto match a user's tooth. For the detail description, please refer to FIG. 1 and FIG. 2, showing schematic diagrams of the oral care patch according to one embodiment of the present invention. FIG. 1 shows a top view and FIG. 2 shows a cross-sectional view taken along line AA'. As shown in FIG. 1, the oral care patch 300 has a rectangular shape. Alternatively, the shape thereof can be square, trapezoid, parallelogram, circle, oval or other polygon, and is not limited thereof. The oral care patch 300 includes a central region 400 and a peripheral region 402, wherein the central region 400 is encompassed by the peripheral region 402. A first split 304 stretching along a first direction 404 and at least a second split 306 stretching along a second direction 406 or a third direction 408 are disposed in the central region 400. In one embodiment, there are four second splits 306, and two of the second splits 306 intersect at one end of the first split 304 and the other two second splits 306 intersect at the other end of the first split 304. As shown in FIG. 2, the first split 304 or the second split 306 has a predetermined width. In one embodiment, the first split 304 and the second split 306 are formed by a cutting machine and the width d thereof is relatively small (approximately to zero). In another embodiment, the width d is a predetermined value such that the first split 304 or/and the second split 306 are similar to trench structures. A wing portion 308 is defined by the first split 304 and the second splits 306. In the present embodiment, the first direction 404 is substantially parallel to a border of the oral care patch 300, such as a width or a length. An angle α between the first direction 404 and second direction 406 and an angle β between the first direction 404 and the third direction 408 are substantially the same, both of which are between 120 degrees and 90 degrees, but is not limited thereto. In one embodiment, a width W of the oral care patch 300 is substantially between 8 and 15 mm, and a length L is substantially between 25 and 30 mm. Preferably, when the length L is 27 mm, the width W can be 8 mm, 10 mm or 12 mm. A width w of the central region 400 is substantially between 4 and 8 mm, and a length 1 is substantially between 10 and 15 mm. In another embodiment, a length of the first split 304 is substantially equal to or smaller than a length of each second split 306.

As shown in FIG. 2, the oral care patch 300 includes a support layer 500 and a thin film layer 502. The support layer 500 can provide supporting force for the shape of the patch and can be easily removed from the thin film layer 502. In some embodiments, the support layer 500 is water proof and can prevent the thin film layer 502 from being damp before use. In one embodiment, the support layer 500 is bonded to the surface of the thin film layer 502. When the oral care patch 300 is folded as a three dimensional structure and attached onto the tooth, the supporting layer 500 is then removed away from the thin film layer 502. In one embodiment, the support layer 500 is selected from the group consisting of gelatin, aluminum foil, regenerated silk fiber, polyurethane (PU), polyethylene (PE), polypropylene (PP), polyesters, nylon, paper, polyethylene terephthalate (PET), polylactic acid (PLA), chitosan, cellulose acetate phthalate, polyvinyl acetate, ethyl cellulose, polymethylmethacrylate, methacryloyl ethyl betaine/acrylate copolymer, methacrylic acid copolymers, methacrylic acid aminoalkyl ester copolymer or a mixture thereof. Preferably, the thin film layer 502 is selected from the group consisting of polyurethane (PU), polyethylene (PE), polypropylene (PP), polyesters, nylon, polyvinyl alcohol (PVA), polylactic acid (PLA), chitosan, polyvinyl methyl ether/maleic acid copolymer (PVM/MA copolymer), polyethylene oxide/polypropylene oxide copolymer (PEO/PPO copolymer), polyvinylpyrrolidone-vinyl acetate copolymer (PVP/VA copolymer), polyethylene oxide (Polyox), polyvinylpyrrolidone (PVP), γ-polyglycolic acid (γ-PGA), polyquaternium, carboxypolymethylene, carboxymethyl cellulose (CMC), hydroxypropyl methylcellulose, hydroxyethylcellulose, hydroxypropylcellulose, gels, gelatin, alginate, regenerated silk fiber, or a mixture thereof.

The thin film layer 502 may be a scour-resistant water-soluble polymer, for example, CMC, to make the thin film layer 502 scour resistant and prevent over-dilution of the health care agent. The thin film layer 502 may be a water-soluble polymer for inhibiting microbial growth, for example, chitosan, to prevent bacteria, fungus and biofilm. The thin film layer 502 may further comprise a thermo-sensitive polymer. It is well-known that thermo-sensitive polymer undergoes a phase transition at a cloud point (CP). Below the CP, the polymer exists in a water soluble form. Once the polymer is heated above the CP, water would be expelled from the polymer chain, resulting in aggregation/precipitation of the polymer. A thermo-sensitive polymer with CP which is slightly below body temperature, for example, Poly(N-isopropylacrylamide), is widely used for the design of thermo-sensitive drug delivery systems such as hydrogels. In the invention, the oral care patch 300 may further comprise a thermo-sensitive polymer in a thin film layer 502. When the thin film layer 502 of the invention contacts teeth, the thermo-sensitive polymer enables the oral care agent to be released from the thin film layer 502. In addition to the advantage for drug release, the thin film layer 502 of the thermo-sensitive polymer is produced with environmentally friendly solvent, water, instead of an organic solvent. In one embodiment of the present invention, the thermo-sensitive polymer may be poloxamer. Poloxamer has good solubility and low viscosity at low temperature (especially less than 10° C.). The viscosity is maximum at about room temperature and drastically drops at around 55° C. Poloxamer provides excellent flow properties for storage at low temperature or processing at high temperature, and shows high viscosity when applied to the human body or used at room temperature, enabling it to effectively maintain the shape of the product or achieve the effect of drug release.

Preferably, the oral care agent in the thin film layer 502 is selected from the group consisting of a whitening agent, a remineralization agent, an anti-biotics agent, an anti-fungal agent, an anesthetics agent, an anti-viral agent, an anti-ulcerative agent, an anti-analgesic agent, an anti-allergic agent, or an anti-microbial agent, or a mixture thereof. In one embodiment, the tooth whitening agent comprises hydrogen peroxide. The antibacterial agent comprises chlorhexidine, povidone-iodine, picoxidine, iodoform, triclosan. The anti-biotics agent includes tetracycline, sulfadiazine, ofloxacin or trimethoprim. The anti-fungal agent includes amphotericine B, nystatin, miconazole or triazoles. The anesthetics agent includes lidocaine, benzocaine, tetracaine, kodeine or cokaine. The anti-viral agent can include acyclovir or acridineamine. The anti-ulcerative agent can include acetoxolone, sucralfate, teprenone or omeprazole. The anti-allergic agent includes non-steroidal anti-inflammatory drug (NSAID) or steroid. It is understood that the above context only shows some embodiments but the oral care agent in the present invention is not limited thereto.

The previous embodiment shows dual layer structure of the oral care patch 300. However, in one embodiment, the oral care patch 300 can only be consisted of one single thin film layer 502. In another embodiment, the oral care patch 300 can further comprise one or more than more layers which can provide extra functions for the oral care patch 300, instead of the thin film layer 500 and the support layer 502. Please refer to FIG. 3, which shows a schematic diagram of the oral care patch according to one embodiment of the present invention. The oral care patch 300 in the present embodiment further comprises a fabric layer 504 disposed between the thin film layer 502 and the support layer 500. The fabric layer 504 provide an extra support ability and flexibility. The fabric layer 504, for instance, can be made of nonwoven fabric material such as polyproylene (PP), thermoplastic polyurethane (TPU), polyethylene (PE), Nylon or the combinations thereof, but is not limited thereto. The fabric layer 504 of the present invention can be adjusted according to the actual situation of the ingredients to achieve different characteristics (for example: strength, flexibility or tearing ability).

It is noted that the first split 304 and/or the second split 306 can be formed alternatively in one or two layers of the lamination structure of the oral care patch 300. As shown in FIG. 3 for example, the first split 304 and/or the second split 306 can be formed only in the thin film layer 500 but is not formed in the fabric layer 504 or the support layer 502. In another embodiment, the first split 304 and/or the second split 306 can be formed in the thin film layer 500 and the fabric layer 504 but is not formed in the support layer 502. In still another embodiment, the first split 304 and/or the second split 306 are formed in thin film layer 500, the fabric layer 504, and the support layer 502. The point is that the first split 304 and the second split 306 should be formed at least in the thin film layer 500.

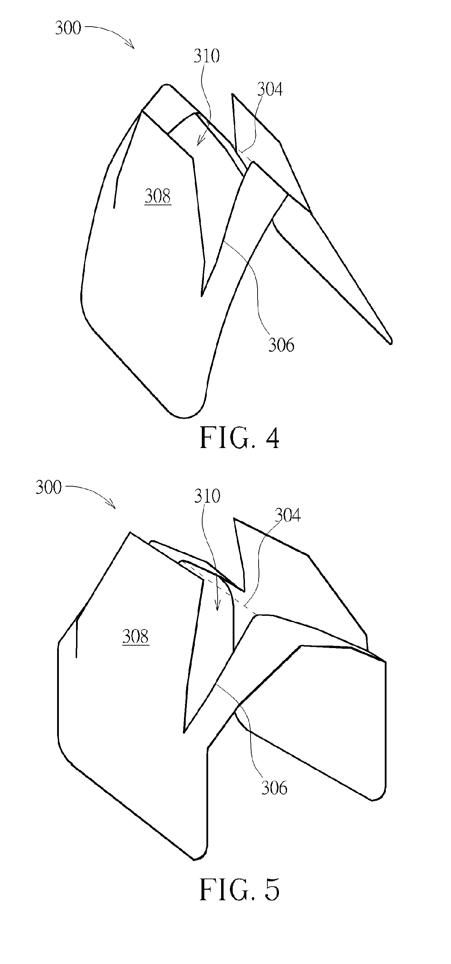

As mentioned above, the oral care patch 300 can be folded into different three dimensional structures so as to match the shape of a user's tooth. Please refer to FIG. 4 and FIG. 5, which illustrate schematic diagrams of the three-dimensional structures of the oral care patch according to one embodiment of the present invention. As shown in FIG. 4, for the incisor tooth or canine tooth, which has a flat plane and a sharp cutting edge, the oral care patch 300 can be folded along the first split 304 such that the wing portion 308 can be bended outwardly along the second split 306, thereby forming an opening 310 in the central region 400 of the oral care patch 300. As a result, the three dimensional structure of the oral care patch 300 is like sharp eaves with a triangle in its cross-section and has a concave that can coincide with the incisor tooth and the wing portion 308 thereof can directly contact the flat plane of the incisor tooth. As shown in FIG. 5, for the molar tooth or canine tooth, the oral care patch 300 can be further bended, forming a house-like structure (with sharp eaves and walls) that has a pentagon in its cross sectional. Accordingly, a concave structure is formed to match the structure of the molar tooth.

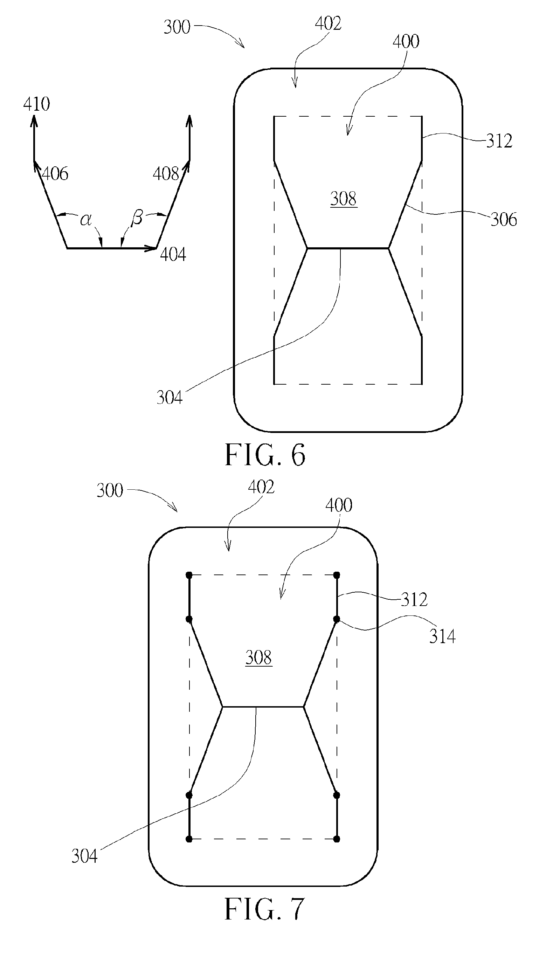

Please refer to FIG. 6 to FIG. 7, which are schematic diagrams of the planar oral care patch according to different embodiment of the present invention. As shown in FIG. 6, besides the structure shown in the previous embodiment, the oral care patch 300 in the present embodiment further includes an extension split 312, being positioned at the end of the second direction 306 opposite to the first split 304 and extending along a fourth direction 410. In one embodiment, the fourth direction 410 is substantially perpendicular to the first direction 404. By utilizing the extension split 312, the splitting of the second split 306 will be directed to a desired direction, thus avoiding breaking off the oral care patch 300. In another embodiment, as shown in FIG. 7, the oral care patch 300 further includes a plurality of stop nodes 314 positioned at the end of the second split 306 opposite to the first split 304 and/or the extension split 312 opposite to the second split 306. The stop nodes 314 can be apertures and formed in the same cutting process as that of the first split 304 and the second split 306. The stop node 314 can end the split and eliminate breaking off the oral care patch 300. In one embodiment, a diameter of the stop node 314 is about 2 mm.

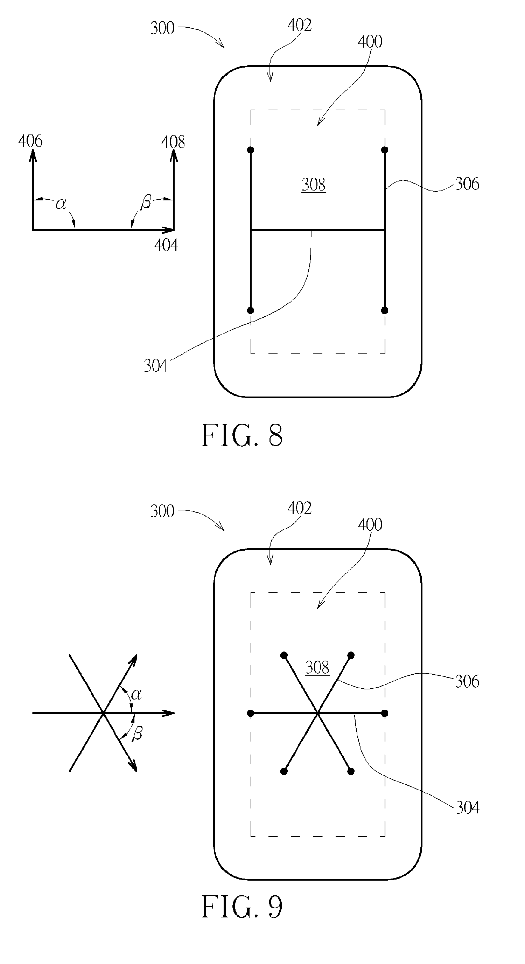

Please refer to FIG. 8 and FIG. 9, which are schematic diagrams of the planar oral care patch according to different embodiments of the present invention. As shown in FIG. 8, the second split 306 extends along the second direction 406 or the third direction 408, wherein the second direction 406 and the third direction 408 is substantially perpendicular to the first direction 404. That is, the angle α and the angle β are about 90 degrees. In another embodiment, as shown in FIG. 9, the second split 306 in the present embodiment crosses the middle of the first split 304. The angle α and the angle β are about 30 degrees to 60 degrees. In this embodiment, more than four second split 306 can be disposed in the central region 400, each intersecting at the same point or different points in the first split 304, thus forming a plurality of wing portions 308. It is understood that those above mentioned embodiment can be incorporated with each other to form various embodiments. For instance, the oral care patch 300 in FIG. 8 can include the extension split 312 in FIG. 6 and/or the stop node 314 in FIG. 7.

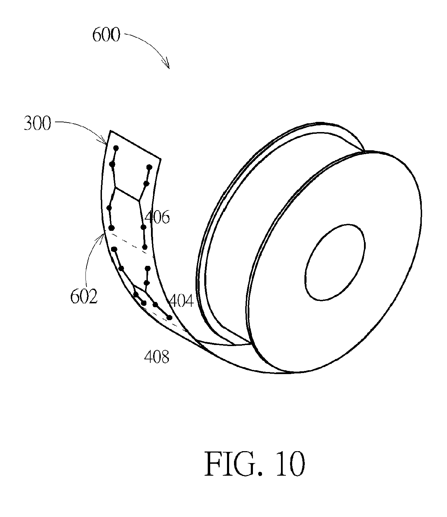

Please refer to FIG. 10, which shows a schematic diagram of the oral care patch tape according to one embodiment of the present invention. As shown in FIG. 10, the oral care patch tape 600 includes a plurality of oral care patches 300, which are packaged and bundled in series. A dissemble line 602 is formed between each two oral care patch 300 so a user can easily obtain one single oral care patch 300 or more than one oral care patches 300 by cutting the dissemble line 602.

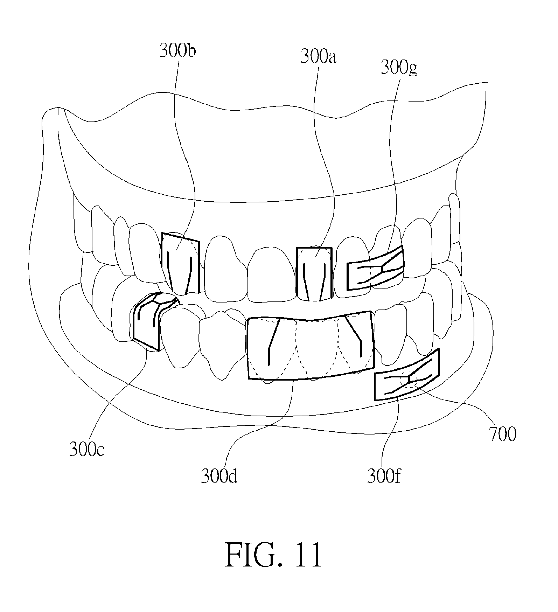

Please refer to FIG. 11, which shows a schematic diagram of the using method of the oral care patch tape according to one embodiment of the present invention. As described above, depending on the type of the tooth, the oral care patch 300 in the present invention can be folded into different dimensional structures, thus matching different types of teeth. For example, as shown in FIG. 11, the oral care patch 300a is for the incisor tooth, the oral care patch 300b is for the canine tooth, the oral patch 300c is for the molar tooth, each comprising different three dimensional concave structures. It is noted that when attaching the oral care patch 300 onto the tooth, not only the surface of the tooth is covered by the thin film layer 502, but in another embodiment, the skin or the oral mucosa adjacent to the tooth can also be covered by the oral care patch 300, giving the skin tissue extra care effect. In one embodiment, besides the tooth, the oral care patch can be directly attached to the skin tissue, such as the oral care patch 300f in FIG. 11. In one embodiment, the skin tissue may contain infection foci 700, such as aphthous ulcers. By using proper oral care agent, which has anti-analgesic, anti-allergic, or anti-microbial effect, the infection foci 700 can therefore be cured. Since the oral care patch 300 in the present invention has the first split 304 or the second split 306 the oral care patch can more match the uneven surface of the skin tissue (especially that adjacent to the tooth). It is because the first split 304, the second split 306 and the formed opening 310 can help it more coincide with the three dimensional surface of the skin tissue. Comparing to conventional aphthous ulcers patch, the oral care patch 300 in the present invention can provide superior attaching ability onto the skin tissue. In still another embodiment, depending on different requirements, the size of the oral care patch 300 can be adjusted so as to match more than one tooth. For example, a larger size of the oral care patch 300d in FIG. 11 is provided to match three teeth at once. It is more convenient to give oral care to those teeth formed of dental bridge. It is still another embodiment that the oral care patch 300 can be used in all kinds of dental prosthesis.

As shown above, the present invention therefore provides a method of using the planar oral patch. First, an oral care patch is provided wherein the oral care patch can be any above-mentioned embodiments. Next, the first split is split (in some embodiments, the second split 306 is split as well) so as to form a three-dimensional structure having an opening 310 (FIG. 4 and FIG. 5 for example). The oral care patch is then attached onto a target tissue such as a tooth or oral skin tissue. After the oral care patch is folded and affixed onto the tissue, the supporting layer of the oral care patch is removed. The target tissue can be one single tooth, a plurality of teeth, a skin tissue or their combination, and is not limited thereto. In one embodiment, the target tissue can be one tooth, such as an incisor tooth, a canine tooth or a molar tooth (for instance, the oral care patch 300a, 300b, or 300c in FIG. 11). In another embodiment, the target tissue can be a plurality of teeth. One embodiment is to fold the oral care patch into a three-dimensional structure such that both opposite sides of the tooth can be covered by the thin film layer (for example, the oral care patch 300d in FIG. 11). Another embodiment is to attach the oral care patch onto at least one tooth, for example, the oral care patch 300g in FIG. 11. In another embodiment, the target tissue is oral mucosa and the embodiment may be similar to the oral care patch 300f in FIG. 11. In still another embodiment, the target tissue may be any dental prosthesis which can be taken away from the user's mouth and subjected to a cleaning process including using the oral care patch. Depending on the oral care agent, the oral care patch 300 can provide whitening, remineralization, anti-biotics, anti-fungal, anesthetics, anti-viral, anti-ulcerative, anti-analgesic, anti-allergic, or anti-microbial effect for the target tissue.

The present invention further provides a method of treating an oral disease. First, an oral care patch is provided wherein the oral care patch can be any above-mentioned embodiments. Next, the first split is split (in some embodiments, the second split is split as well) so as to form a three-dimensional structure having an opening. The oral care patch is then attached onto a target tissue suffering from the oral disease. After the oral care patch is folded and affixed onto the tissue, the supporting layer of the oral care patch is removed. The target tissue can be one single tooth, a plurality of teeth, a skin tissue or their combination. The oral disease can be aphthous ulcers, periodontosis, but is not limited thereto.

The present invention further provides a method of prophylactically treating an oral disease. First, an oral care patch is provided wherein the oral care patch can be any above-mentioned embodiments. Next, the first split is split (in some embodiments, the second split is split as well) so as to form a three-dimensional structure having an opening. The oral care patch is then attached onto a target tissue susceptible to an oral disease. After the oral care patch is folded and affixed onto the tissue, the supporting layer of the oral care patch is removed. The oral disease can be aphthous ulcers, periodontosis, but is not limited thereto.

In light of above, the present invention provides an oral care patch which is originally planar and can be folded into different three dimensional structures depending on different requirements or different target tissue. The oral care patch can be packed in series as a tape bundle and can be easily used when needed. The oral care patch can be used for treating disease or for dental cosmetic use.

## Claims

1. A planar oral care patch (300), **characterized in that** the planar oral care patch (300) comprises a first split (304) stretching along a first direction (404) in a central region (400) of the planar oral care patch (300) so that the planar oral care patch (300) can be folded as at least one three-dimensional structure .

2. The planar oral care patch (300) of claim 1, **characterized by** at least a second split (306) stretching along a second direction (406, 408) and crossing through the first split (304).

3. The planar oral care patch (300) of claim 2 **characterized in that** the planar oral care patch (300) comprises four second splits (306), and two of the second splits (306) intersect at one end of the first split (304) and the other two second splits (306) intersect at the other end of the first split (304).

4. The planar oral care patch (300) of claim 3 **characterized in that**, an angle (α, β) between the first direction (404) and the second direction (406) is between 120 degrees and 90 degrees.

5. The planar oral care patch (300) of claim 3 **characterized in that**, a length of the first split (304) is substantially equal to or smaller than a length of each second split (306).

6. The planar oral care patch (300) of claim 3 **characterized by** at least a stop node (314) disposed at one end of the second split (306) opposite to the first split (304).

7. The planar oral care patch (300) of claim 3 **characterized by** an extension split (312) connecting to one end of the second split (306) opposite to the first split (304), and at least a stop node (312) disposed at one end of the extension split (312) opposite to the second split (306).

8. The planar oral care patch (300) of claim 7 **characterized by** at least a stop node (314) disposed at one end of the extension split (306) opposite to the second split (306).

9. The planar oral care patch (300) of claim 3 **characterized in that**, an angle (α, β) between the first direction (404) and the second direction (406, 408) is 90 degrees.

10. The planar oral care patch (300) of claim 1 **characterized in that**, the planar oral care patch (300) can be folded as a three-dimensional structure having a sharp eaves structure with a triangle in its cross-section.

11. The planar oral care patch (300) of claim 1 **characterized in that**, the planar oral care patch (300) can be folded as a three-dimensional structure having a house structure with a pentagon in its cross-section.

12. The planar oral care patch (300) of claim 1 **characterized in that**, the planar oral care patch (300) comprises a thin film layer (502).

13. The planar oral care patch (300) of claim 12 **characterized in that**, the thin film layer (502) is selected from the group consisting of polyurethane (PU), polyethylene (PE), polypropylene (PP), polyesters, nylon, polyvinyl alcohol (PVA), polylactic acid (PLA), chitosan, polyvinyl methyl ether/maleic acid copolymer (PVM/MA copolymer), polyethylene oxide/polypropylene oxide copolymer (PEO/PPO copolymer), polyvinylpyrrolidone-vinyl acetate copolymer (PVP/VA copolymer), polyethylene oxide (Polyox), polyvinylpyrrolidone (PVP), γ-polyglycolic acid (γ-PGA), polyquaternium, carboxypolymethylene, hydroxypropyl methylcellulose, hydroxyethylcellulose, hydroxypropylcellulose, gels, gelatin, alginate, regenerated silk fiber, and mixtures thereof.

14. The planar oral care patch (300) of claim 12 **characterized in that**, the thin film layer (502) further comprises an oral care agent selected from the group consisting of a whitening agent, a remineralization agent, an anti-biotics agent, an anti-fungal agent, an anesthetics agent, an anti-viral agent, an anti-ulcerative agent, an anti-analgesic agent, an anti-allergic agent, an anti-microbial agent, and mixtures thereof.

15. The planar oral care patch (300) of claim 12 **characterized in that**, the planar oral care patch (300) further comprises a support layer (500), and one side of the thin film layer (502) provides attachment to target tissue and the other side of the thin film layer (502) is attached to the support layer (500).

16. The planar oral care patch (300) of claim 15 **characterized in that**, the support layer (500) is selected from the group consisting of gelatin, aluminum foil, regenerated silk fiber, polyurethane (PU), polyethylene (PE), polypropylene (PP), polyesters, nylon, paper, polyethylene terephthalate (PET), polylactic acid (PLA), chitosan, cellulose acetate phthalate, polyvinyl acetate, ethyl cellulose, polymethylmethacrylate, methacryloyl ethyl betaine/acrylate copolymer, methacrylic acid copolymers, methacrylic acid aminoalkyl ester copolymer and mixtures thereof.

17. The planar oral care patch (300) of claim 15 **characterized in that**, the planar oral care patch (300) further comprises a fabric layer (504) disposed between the support layer (500) and the thin film layer (502).

18. The planar oral care patch (300) of claim 17 **characterized in that**, the fabric layer (504) is selected from the group consisting of polyproylene (PP), thermoplastic polyurethane (TPU), polyethylene (PE), Nylon and mixtures thereof.

19. An oral care patch tape (600), comprising a plurality of the planar oral care patches (300) of claim 1, **characterized in that** each of the planar oral care patches (300) are bundled in series and a dissemble line (602) is disposed between each of the two planar oral care patches (300).

20. A method of using the planar oral care patch (300), **characterized in that** the method comprises:
providing the planar oral care patch (300) of claim 1;
splitting the first split (304);
folding the planar oral care patch (300) as the three-dimensional structure; and
attaching the oral care patch (300) onto a target tissue.

21. The method of using the planar oral care patch (300) of claim 20 **characterized in that**, the target tissue comprises a tooth, plural teeth or oral mucosa.
